# EUROPEAN PATENT APPLICATION

(11) **EP 0 949 557 A1**
(43) Date of publication of application: **13.10.1999**
(21) Application number: 99301944.7
(22) Date of filing: 15.03.1999
(51) Int. Cl.: G06F 1/32

(54) **Power saving in a portable computer**

(30) Priority: 07.04.1998 KR 9812255
(71) Applicant: Samsung Electronics Co., Ltd., Suwon, Kyungi-do (KR)
(72) Inventor: Park, Woo-Il, Kangseo-ku, Seoul (KR)
(74) Representative: Tunstall, Christopher Stephen

(57) **Abstract**

A portable computer is provided with a sensing device which responds to absence of the user so that the computer system goes into a power saving function that cuts off power directed to a back-light unit of the LCD display panel.

## Description

### Background of the Invention

The present invitation relates to portable computers, and more particularly to a portable computer having a power saving function that reduces supply power consumed by a display device.

Compact and lightweight notebook and laptop computers have become increasingly popular due to their portability. These portable computers are typically powered by rechargeable batteries or alternatively by a power adapter which can be connected to an AC outlet. Often, it is desirable to operate portable computers for lengthy periods of time in environments where AC power is unavailable.

As a system level solution, most portable computer systems usually adopt a power saving and power management system as provided in the Advanced Power Management (APM) system jointly developed by Intel and Microsoft. Such power ,management maximises available battery powered usage time of the computer, by automatically reducing the power consumption of parts of the computer not currently in use. The power management system provides various power saving functions with a lapse of time set by a setup program, and manages the progress of power saving between full-on, doze, standby and rest modes. The rest mode consumes least power, by interrupting power supplies directed to microprocessor, display apparatus, hard disk drives, floppy disk drives, and other subsystems. The only power supplied is that required by the subsystem to enable it to restore the system to the full-on state when required.

A power saving function may be performed by a back-light timer with a lapse of time set by the setup program, which manages cut-off of power supply directed to a back-light unit of an LCD display panel. When the computer system has not been used for a preset time, the back-light unit of LCD display goes into a power-off status. This power management is useful for portable computers having an LCD display panel so that they use less power while the system is running on a battery power source.

However, when the portable computer is powered on and the computer is being used, the user may be interrupted by some matter and the user may leave the portable computer without turning off power or placing the computer system into the power management rest mode. In this case, the battery power is still being consumed while the user is away from the portable computer. Further, if the system power down times of the above described power management system have been set with long time intervals, the power saving function may be ineffective in saving the battery power. The power down times in the power management setup must be modified to suit work conditions whenever required. The adjustment process is inconvenient for the user and, conversely, the modified power saving function may be unsuitable in certain applications.

Thus, there is a need for a more effective and simple power saving function that can minimise unnecessary power consumption regardless of the power management setup condition.

### Summary of the Invention

The present invention preferably provides a portable computer which can perform an instant power saving function in response to absence of a user.

According to an embodiment of the present invention, a portable computer including a display, further comprises a sensor for sensing the presence or absence of a user within a sensing range, and for generating a signal indicative of the presence or absence of the user; and control means for interrupting power to the display, in response to a signal indicative of the absence of the user.

The sensor may be mounted in a housing of the display.

In an embodiment of the invention, the portable computer further comprises a basic input/output system (BIOS) which stores setup information regarding the enablement or disablement of the sensor and/or the control means.

In an embodiment of the invention, the control means generates a system management interrupt signal that allows the computer to enter a power saving mode designated by the BIOS.

According to an aspect of the present invention, there is also provided a method for saving power in a portable computer including a display, the method comprising sensing the presence or absence of a user within a sensing range, and generating a signal indicative of the presence or absence of the user; and interrupting power to the display of the computer, in response to a signal indicative of the absence of the user.

The method may further comprise the step of confirming that the portable computer is being powered by battery.

The method may further comprise the steps of sensing the presence of a user; inviting the user to enter a password; receiving a password entered by the user; comparing the password entered by the user with a password previously stored in the portable computer and re-establishing normal operation of the portable computer if the passwords are identical.

The display may comprise a liquid crystal display panel, and a back light. The power to the display may include power required to illuminate the back light.

In an embodiment of the invention, the sensing range is selectable by selecting among a range of options provided by the portable computer.

The sensor may comprise a transmitter for emitting a sensing signal; and a receiver for detecting the reflection of the sensing signal from the body of the user, to indicate the user's presence, and for detecting the absence of a reflection of the sensing signal from the body of the user, to indicate the user's absence.

The sensing signal may comprise infrared light, or ultrasound waves.

The sensor may comprise a receiver for detecting the a sensing signal emitted from the body of the user, to indicate the user's presence, and for detecting the absence of a sensing signal emitted from the body of the user, to indicate the user's absence. The sensing signal may comprise infrared light.

### Brief Description of the Drawings

Certain objects, advantages and characteristics of the present invention will become apparent in the following description of certain embodiments, given by way of examples only, with reference to the accompanying drawings in which:
Fig.1 is a perspective view of a portable computer having sensing device in accordance with an embodiment of the present invention;
Fig.2 is a side elevation of the portable computer of Fig.1 showing a sensing range of the sensing device;
Fig.3 is a block diagram of a portable computer system including a sensing device, according to an embodiment of the present invention;
Fig.4 is a flow diagram showing an operation mode of a sensing device according to an aspect of the present invention; and
Figs.5a and 5b are flow diagrams depicting another operation mode of a sensing device according to an aspect of the present invention.

### Detailed Description of the Drawings

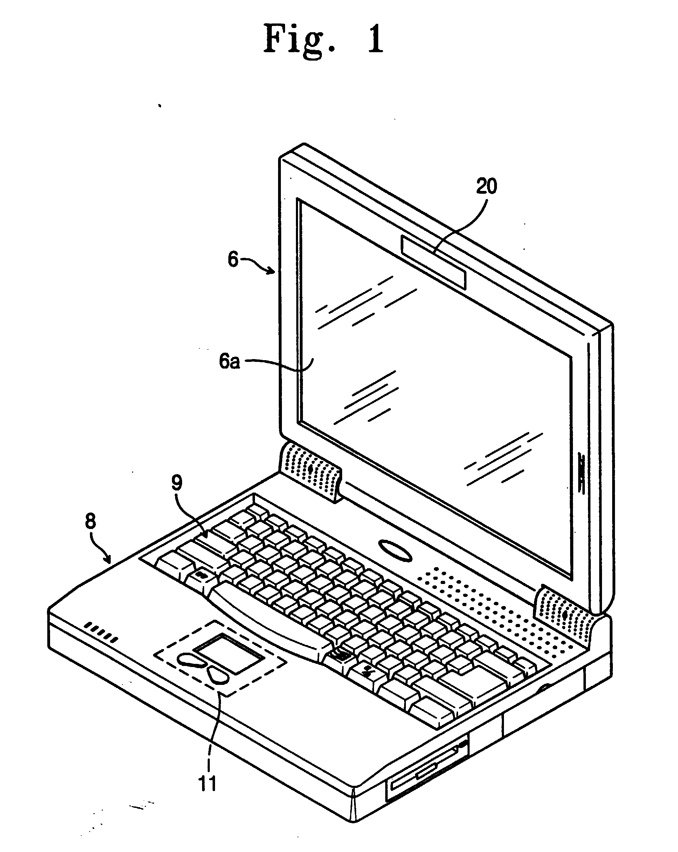

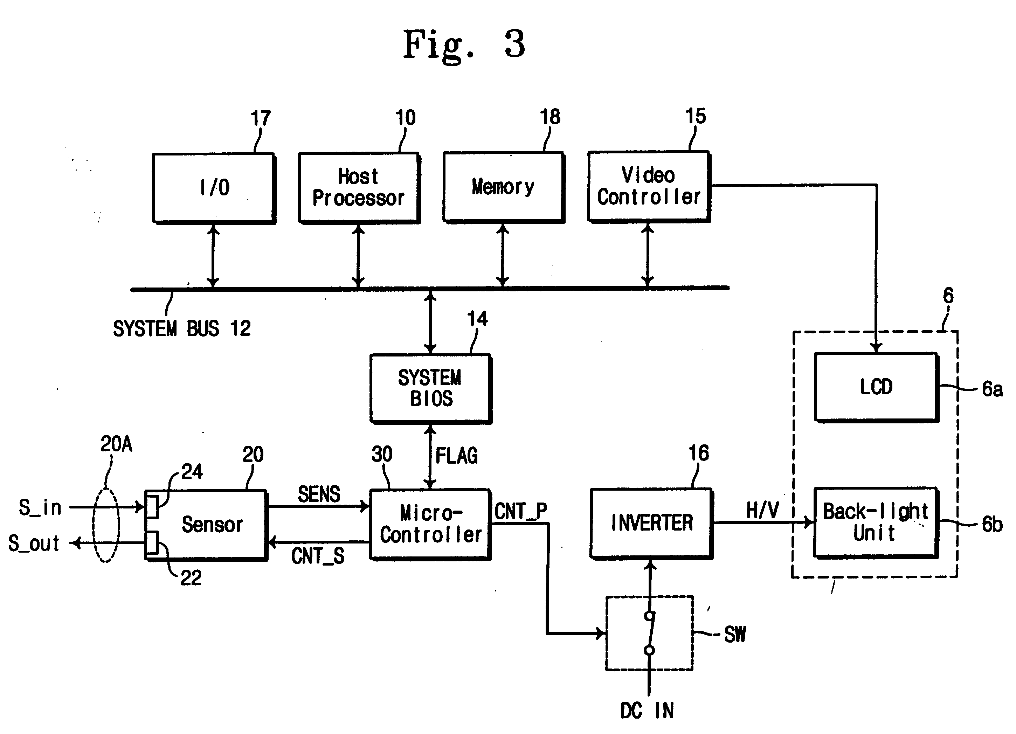

Referring to Fig. 1, there is shown a portable computer having a user sensing device in accordance with an embodiment of the present invention. The portable computer is composed of a main body 8 having a keyboard 9 provided at top side thereof and a flat panel display 6 hingedly attached to the main body. The flat panel display 6 includes an LCD (liquid crystal display) panel 6a facing a user, when in an open or 'in use' position. The flat panel display forms a lid covering the keyboard 9 of the main body when in a closed position. Provided in a top portion of the flat panel display 6 is a user sensing device 20, for detecting a person located within its sensing range. The user sensing device 20 comprises a sensor covered by a window. The sensor can transmit a sensing signal toward the user and receive a sensing signal reflected from the body of the user. The presence or absence of a signal reflected from the body of the user correspondingly indicates the presence or absence of the user. If the sensor determines that the user is absent, the computer system instantly activates a power saving function that cuts off power directed to a back-light unit of the LCD display panel 6. This function will be described later with reference to Fig. 3. In the drawing, reference number 11 denotes a touch pad installed in a top portion of the main body.

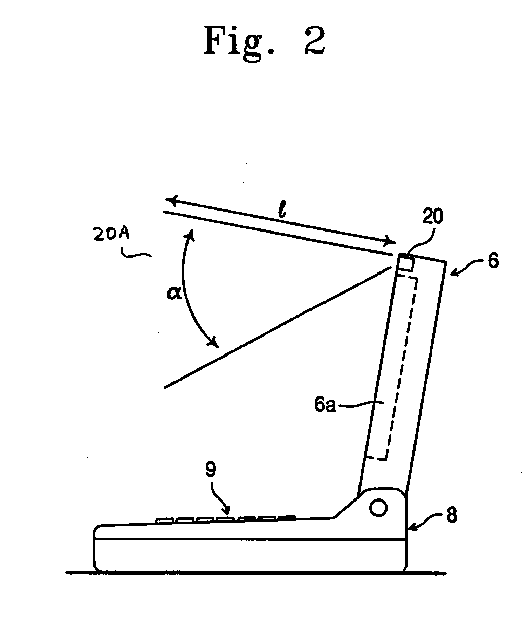

As shown in Fig. 2, the sensing device 20 is preferably mounted in a top portion of the housing of the flat panel display 6 so as to face the user when the computer is in use. The sensing range 20A of the user sensing device 20 is determined by a propagation length ℓ and angle α of the sensing signal that is emitted from the sensing device. The propagation length and angle must be sufficient to reach a user who is located in a normal operating position, in front of the portable computer.

Fig. 3 shows a block diagram of the portable computer system including a user sensing device, according to an embodiment of the present invention. The portable computer system comprises a microprocessor 10, a basic input/output system (BIOS) 14, an input/output (I/O) device 17, a memory 18, and a video controller 15, connected one another through a system bus 12. The video controller 15 is coupled to the LCD display panel 6 which includes liquid crystal display (LCD) device 6a and back-light unit 6b for the display device 6a.

The computer system further comprises a microcontroller 30 coupled to the system BIOS 14. An input terminal of the microcontroller 30 is connected to an output terminal of the sensor device 20 to receive a logic signal SENS. An input terminal of the sensor device 20 is connected to an output terminal of the microcontroller 30 to receive a control signal CNT_S. An output terminal of the microcontroller 30 is connected to supply a control signal CNT_P to a control gate of a switch SW provided in a DC power supply line. The switch controls DC power directed to an inverter 16 which provides a high AC voltage (H/V) required to operate the back-light unit 6b of the LCD display panel 6.

The sensor device 20 includes a transmitter 22, a receiver 24 and a sensor drive circuit (not shown) for activating the transmitter 22 and receiver 24 by supplying an operating voltage. The transmitter 22 generates a sensing signal S_out and transmits it into the sensing range 20A. The receiver 24 receives a sensing signal S_in reflected from within the sensing range 20A. The sensing signal may, for example, be of ultrasound or infrared light.

An infrared detector 24 may be sensitive to infrared light emitted by the body of the user. In such case, it may not be necessary to provide transmitter 22.

The transmitter 22 and receiver 24 of the sensing device 20 are activated upon receiving a sensor control signal CNT_S fed from the microcontroller 30. The user sensing device 20 outputs logic signal SENS to an input terminal of the microcontroller 30 to indicate whether a reflected sensing signal S_in is received by the receiver 24, or not. In response to the output signal SENS of the sensing device 20, the microcontroller 30 outputs power control signal CNT_P to turn on/off the switch SW placed in the power supply line DC IN directed to the inverter 16. The switch SW may consist of a power transistor, or a relay switch, or any equivalent means.

The BIOS 14 has a power management setup program stored in the BIOS memory. The power management setup program generally includes a list of items so that a user may enable/disable the power saving features and define the hard disk drive and system power down times for power saving. The power management setup may further include an option of enabling/disabling a user monitoring function associated with operation of the user sensing device 20.

When a user sets the user monitoring function to be enabled, the microcontroller 30 reads out the setup information from the BIOS 14, preferably during the booting process, and outputs the control signal CNT_S so as to activate the transmitter 22 and receiver 24 of the sensing device 20.

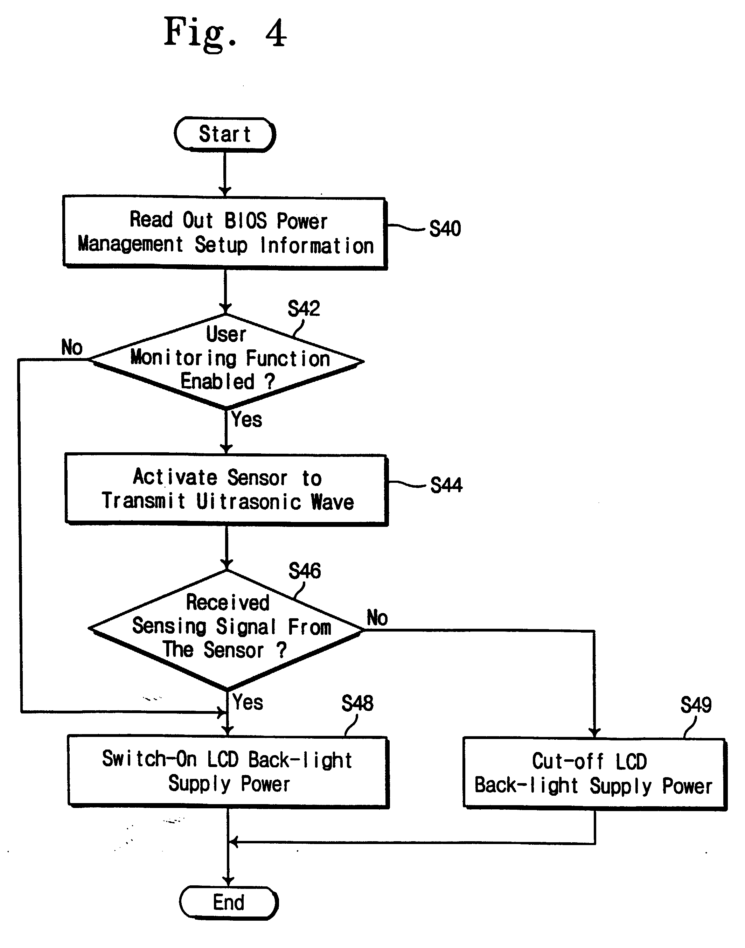

A detailed operation of the microcontroller 30 with respect to the user monitoring function will be described with reference to the flow chart of Fig. 4. At step S40, during the system boot-up, the microcontroller 30 reads out the power management setup information from the BIOS 14. Then the microcontroller 30 determines whether the user monitoring function has been enabled, at step S42.

If the user monitoring function has been enabled, the microcontroller 30 outputs a control signal CNT_S at step S44, in order to activate the transmitter 22 and receiver 24 of the sensing device 20. Thus, a user sensing signal, for example an ultrasonic wave, is emitted into the sensing range by the transmitter 22 of the sensing device 20.

Next, the microcontroller 30 determines at step S46 whether the signal SENS is received from the sensing device 20, representing that a reflected sensing signal S_in is received by the receiver 24. If a user is located within the sensing range and a reflected ultrasonic wave is received by the receiver 24, a low value signal SENS is provided to the microcontroller. The microcontroller 30 responds to the low level signal SENS and produces a high level power control signal CNT_P that turns the switch SW on to supply DC power to the inverter 16. Thus, at step S48, a high voltage AC power is generated in the inverter 16 and is supplied to the back-light unit 6b of the LCD display panel 6. With this, the back-light unit 6b is lit as in the normal operation state of the portable computer.

On the other hand, if the user is not present within the sensing range 20A and a reflected ultrasonic wave S_in is not received by the receiver 24, a high value signal SENS is provided to the microcontroller. The microcontroller 30 responds to the high level signal SENS and produces a low level power control signal CNT_P that turns the switch SW off, and the DC power to the inverter 16 is cut off. Thus, at step S49, the required high AC voltage H/V is not generated in the inverter 16, so no power is supplied to the back-light unit 6b of the display 6. With this, the back-light unit 6b is turned off and so the computer system goes into a power saving function related to the back-light unit 6b. It should be noted that this power saving function can be set to start immediately the user leaves the operating position of the portable computer.

If the user later returns to the operating position of the portable computer, a reflected ultrasonic wave will again be received by the receiver 24 and a low value signal SENS will again be provided to the microcontroller. The microcontroller 30 will respond to the low level of signal SENS to produce a high level power control signal CNT_P to turn the switch SW back on. Then the back-light unit 6b lights and the user monitoring power saving function stops.

Alternatively, if it is found at step S42 that the user monitoring function has been disabled, the microcontroller 30 outputs a control signal CNT_S that inactivates the user sensing device 20, as well as a high level power control signal CNT_P that turns the switch SW on. Thus, the user monitoring power saving function does not operate, but the computer system performs other power saving operations as designated in the power management setup program of the system BIOS.

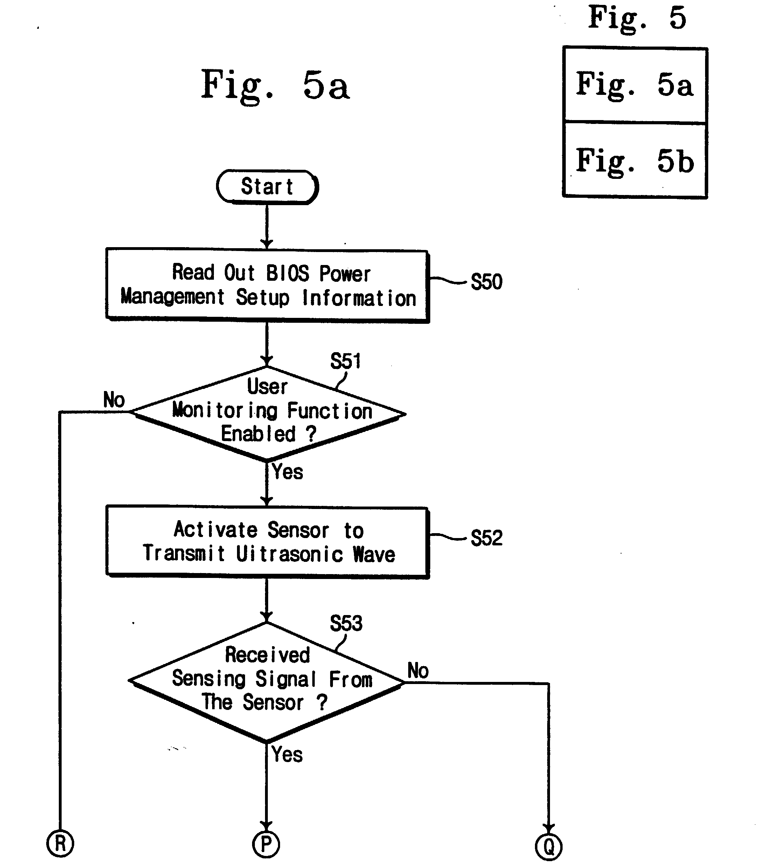

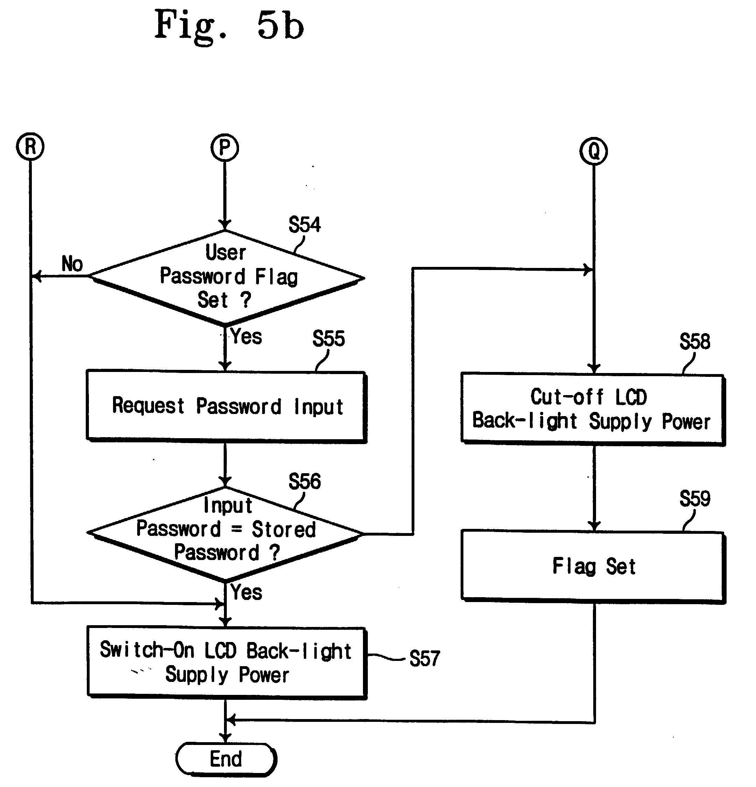

Figs. 5a and 5b show another operation mode of the microcontroller 30 with respect to the user sensing device 20. At step S50, during the system boot-up, the microcontroller 30 reads out power management setup information from the BIOS 14. Then the microcontroller 30 determines whether the user monitoring function is enabled, at step S51. If the user monitoring function has been enabled, the microcontroller 30 outputs a control signal CNT_S, at step S52, to activate the transmitter 22 and receiver 24 of the sensing device 20. A user sensing signal, for example an ultrasonic wave, is therefore emitted into the sensing range 20A by the transmitter 22 of the sensing device 20.

Next, the microcontroller 30 determines at step S53 whether the sensing signal SENS is received from the sensing device 20, to represent that the reflected sensing signal S_in is received by the receiver 24. If a user is located within the sensing range and a reflected ultrasonic wave S_in is received by the receiver 24, the microcontroller 30 responds to the low level input signal SENS and further determines at step S54 whether a user password flag has been set in the system BIOS 14. If a user password has been set, the microcontroller 30 sends a command to the BIOS 14 which causes generation of a message requesting input of the user password, at step S55.

When the user has input a password, a further determination is made at step S56 whether the input password is identical with a stored password. If the input password is identical with the stored password, the microcontroller 30 proceeds to step S57, to produce a high level power control signal CNT_P that turns switch SW on, to supply DC power to the inverter 16. Thus, at step S57, high voltage AC power is generated in the inverter 16 and is supplied to light the back-light unit 6b of the display 6 as in the normal operation state.

However, if the input password is not identical with the stored password, the microcontroller 30 proceeds to step S58, to produce a low level power control signal CNT_P that turns switch SW off, and the DC power applied to the inverter 16 is cut off. Thus, the high voltage H/V is not generated in the inverter 16, and no AC power is supplied to the back light unit 6b of the display 6. With this, the back light unit 6b is turned off and the computer goes into the user monitoring power saving mode related to the back light unit 6b.

On the other hand, if a user is not present within the sensing range, and a reflected ultrasonic wave S_in is not received by the receiver 24 in step S53, the microcontroller 30 proceeds to step S58, where it responds to the high level input signal SENS to produce a low level power control signal CNT_P. This turns switch SW off and the DC power applied to the inverter 16 is cut off. Thus, the high voltage H/V is not generated in the inverter 16, and no AC power is supplied to the back-light unit 6b of the LCD display panel 6. With this, the back-light unit 6b is turned off and the computer system goes into the user monitoring power saving mode related to the back-light unit 6b. This user monitoring power saving function may be configured to start immediately that the user is detected as being absent from the portable computer. At step S59, a flag is set in the BIOS to represent initiation of the user monitoring power saving mode related to the back-light unit 6b.

If the user returns to the operating position of the portable computer, a reflected ultrasonic wave S_in will again be received by the receiver 24. At step S53, the microcontroller 30 will detect a corresponding sensing signal SENS provided by the sensing device 20. Responsive to the input signal SENS, it will produce a high level power control signal CNT_P that turns the switch SW on. Then the back-light unit 6b lights, and the user monitoring power saving function stops.

Alternatively, if it is found that the user monitoring function has been disabled, at step S51, the microcontroller 30 outputs a control signal CNT_S to inactivate the user sensing device 20, as well as a high level power control signal CNT_P that turns the switch SW on, in step S57. Thus, the user monitoring power saving function does not operate, but the computer system performs other power saving operations as designated by the power management setup program of the system BIOS.

Further, if it is found at step S54 that the user password flag has not been set in the BIOS, the microcontroller proceeds to step S57 to turn the switch SW on, without passing through steps S55, S56.

As apparent from foregoing description, the user sensing device 20 of the portable computer preferably continuously monitors the computer user. If it is found the user has left the computer, the computer system immediately goes into the user monitoring power saving mode that turns off the back light unit of the LCD display panel. With this, a user friendly feature of the power saving function can be provided in the power management system and a more effective power saving operation can be performed in battery powered portable computers. Further, by using the user password input process, the computer system can recognise its registered user after an absence from the computer operating position which results in protection of the contents of the work.

In an alternative embodiment, the sensing device 20 may be arranged to periodically check for the user's presence. For example, the sewing device may send an ultrasonic signal S_out every few seconds, every minute, or every five minutes or so, and detect any reflected signal S_in indicating the user's presence.

The range 20A must be set up to avoid false detection of a user's presence or absence. For example, spurious reflections from furniture or passers-by could be interpreted as indicating the presence of the user if the range 20A is set too large. If the range 20A is set too small, the user monitoring power saving mode of the invention may be activated merely by the user leaning back in his chair, which would obviously be undesirable.

Although the invention has been described with reference to sensing devices using infrared or ultrasonic waves, other types of sensor could be used.

The operating position which is occupied by a user, when present, typically represents a chair adjacent to a desk upon which the portable computer is placed. However, the present invention may be adapted to operate with other types of operating position. For example, a user may stand upright when using a computer mounted on a high shelf or the like. Alternatively, a user may use the computer resting on his lap. The computer may include a selection of options for setting the range 20A according to the operating position employed.

The user monitoring power saving operation may be arranged to be enabled only when the computer is being powered by battery.

In a further embodiment of the invention, the microcontroller 30 may be set up to provide a system interrupt signal to the system BIOS 14, which will enable the portable computer to enter a further power saving mode, as determined by the options selected in the BIOS, upon detection of the absence of the user.

## Claims

1. A portable computer including a display (6), characterised in that it further comprises:
- a sensor (20) for sensing the presence or absence of a user within a sensing range (20A), and for generating a signal (SENS) indicative of the presence or absence of the user; and
- control means (30, SW) for interrupting power (H/V) to the display, in response to a signal (SENS) indicative of the absence of the user.

2. A portable computer according to claim 1 wherein the sensor is mounted in a housing of the display.

3. A portable computer according to any of claims 1-2, further comprising a basic input/output system (BIOS) (14) which stores setup information regarding the enablement or disablement of the sensor and/or the control means.

4. A portable computer according to claim 3, wherein the control means generates a system management interrupt signal (FLAG) that allows the computer to enter a power saving mode designated by the BIOS.

5. A method for saving power in a portable computer including a display (6), the method comprising:
- sensing (S46; S53) the presence or the absence of a user within a sensing range (20A), and generating a signal (SENS) indicative of the presence or absence of the user; and
- interrupting (S49; S58; CNT_P, SW) power to the display of the computer, in response to a signal indicative of the absence of the user.

6. A method according to claim 5, further comprising the step of:
- confirming that the portable computer is being powered by battery.

7. A method according to any of claims 5-6 further comprising the steps of:
- inviting (S55) the user to enter a password;
- receiving (S56) a password entered by the user;
- comparing (S56) the password entered by the user with a password previously stored in the portable computer and
- re-establishing (S57) normal operation of the portable computer if the passwords are identical.

8. A portable computer or a method according to any of claims 1-7 wherein the display comprises a liquid crystal display panel (6a), and a back light (6b), and wherein the power to the display includes power required to illuminate the back light.

9. A portable computer or a method according to any of claims 1-8 wherein the sensing range is selectable by selecting among a range of options provided by the portable computer.

10. A portable computer or a method according to any of claims 1-9 wherein the sensor comprises:
- a transmitter (22) for emitting a sensing signal (S_out) ; and
- a receiver (24) for detecting the reflection (S_in) of the sensing signal from the body of the user, to indicate the user's presence, and for detecting the absence of a reflection of the sensing signal from the body of the user, to indicate the user's absence.

11. A portable computer or a method according to claim 10 wherein the sensing signal comprises one of: infrared light and ultrasound waves.

12. A portable computer or a method according to any of claims 1-11 wherein the sensor comprises:
- a receiver (24) for detecting a sensing signal (S_in) emitted from the body of the user, to indicate the user's presence, and for detecting the absence of a sensing signal emitted from the body of the user, to indicate the user's absence.

13. A -portable computer or a method according to claim 12 wherein the sensing signal comprises infrared light.

14. A portable computer or a method as described and/or as illustrated in the accompanying drawings.
